# EUROPÄISCHE PATENTSCHRIFT

(11) **EP 1 231 125 B1**
(45) Veröffentlichungstag und Bekanntmachung des Hinweises auf die Patenterteilung: **19.04.2006**
(21) Anmeldenummer: 02002343.8
(22) Anmeldetag: 31.01.2002
(51) Int. Cl.: B62B 7/04, B62B 13/14, B62B 7/00, B62B 9/26

(54) **Fahrbare Sitzeinrichtung**
Mobile sitting device
Dispositif de siège mobile

(30) Priorität: 07.02.2001 DE 20102066 U; 01.03.2001 DE 10109923
(43) Veröffentlichungstag der Anmeldung: 14.08.2002
(73) Patentinhaber: WANZL METALLWARENFABRIK GMBH, D-89336 Leipheim (DE)
(72) Erfinder: Scheffler, Hans, 89233 Neu-Ulm/Burlafingen (DE)

(56) Entgegenhaltungen:
- EP-A- 0 995 662
- US-A- 2 443 236
- US-A- 4 381 870
- US-A- 5 354 079
- US-A- 6 161 848

## Beschreibung

Die Erfindung betrifft eine fahrbare Sitzeinrichtung für ein Kleinkind, wie von der EP0995662A1 gezeigt, mit einem Fahrgestell, mit einer Schiebeeinrichtung und mit einem Sitz zur Aufnahme eines Kleinkindes, wobei der Sitz eine Sitzfläche und eine Rükkenlehne aufweist und nach vorne durch einen Kleintisch begrenzt ist und wobei hinter dem Sitz wenigstens eine Ablage zum Abstellen von Tabletts vorgesehen ist.

Sitzeinrichtungen dieser Art findet man neuerdings in Autobahnraststätten. Dort werden die Sitzeinrichtungen jenen Gästen zur Verfügung gestellt, die die Autobahnraststätte mit Kleinkindern besuchen. Will man an der Theke Essen abholen, so kann das Kleinkind in der fahrbaren Sitzeinrichtung untergebracht werden, während das wenigstens eine Tablett, auf dem sich das Essen befindet, auf einer an der Sitzeinrichtung befindlichen Ablage abgestellt werden kann. Die Sitzeinrichtungen lassen sich ganz nahe an einen Tisch heranfahren, wobei das Kleinkind in der Sitzeinrichtung verbleibt. Ist man mit dem Essen fertig, kann das wenigstens eine Tablett, zusammen mit Tellern, Besteck und Gläsern auf der Ablage wieder abgestellt und die so beladene Sitzeinrichtung zu einem Tablettsammelwagen gefahren werden, wo sich das wenigstens eine Tablett entsorgen lässt.
Die bekannten Sitzeinrichtungen weisen zwei Nachteile auf. Ein erster Nachteil besteht darin, dass die zur Aufnahme eines Tabletts befindliche Ablage nach hinten geneigt angeordnet ist, so dass besonders darauf abgestellte Gläser zum Kippen neigen und dass mehrere Sitzeinrichtungen bei Nichtgebrauch viel Stellplatz erfordern. Ähnliche Sitzeinrichtungen werden auch von der US2,443,236 und der US4,381,870 gezeigt.

Die Aufgabe der Erfindung besteht darin, eine Sitzeinrichtung der hier vorliegenden Art so weiterzuentwickeln, dass die eben genannten Nachteile vermieden werden können.

Als Lösung der Aufgabe wird vorgeschlagen, die hinter dem Sitz vorgesehene wenigstens eine Ablage horizontal anzuordnen und das Fahrgestell konisch oder auf gleichwirkende Weise so zu gestalten, dass die Sitzeinrichtung in eine weitere, gleiche Sitzeinrichtung platzsparend einschiebbar ist.

Die horizontal angeordnete Ablage erlaubt in vorteilhafter Weise einen sicheren Transport eines mit Essen beladenen Tabletts, wobei es sich als zweckmäßig erweist, wenn die Ablage zusätzlich mit Halterungen ausgestattet ist, die zur Aufnahme von Flaschen und Gläsern in aufrecht stehender Lage geeignet sind. Als besonders vorteilhaft erweist es sich jedoch, dass Sitzeinrichtungen der vorgeschlagenen Art bei Nichtgebrauch platzsparend ineinanderschiebbar sind. Die Sitzeinrichtungen stehen somit nicht störend im Wege, vor allen Dingen dann nicht, wenn sie mit Hilfe bekannter Münzpfandsysteme aneinandergekoppelt abgestellt werden können.

Die Erfindung wird anhand von Ausführungsbeispielen näher erläutert. Es zeigt
Fig. 1 eine Sitzeinrichtung in Seitenansicht;
Fig. 2 zwei Sitzeinrichtungen platzsparend ineinandergeschoben;
Fig. 3 eine weitere Sitzeinrichtung sowie
Fig. 4 eine Ablage von oben betrachtet.

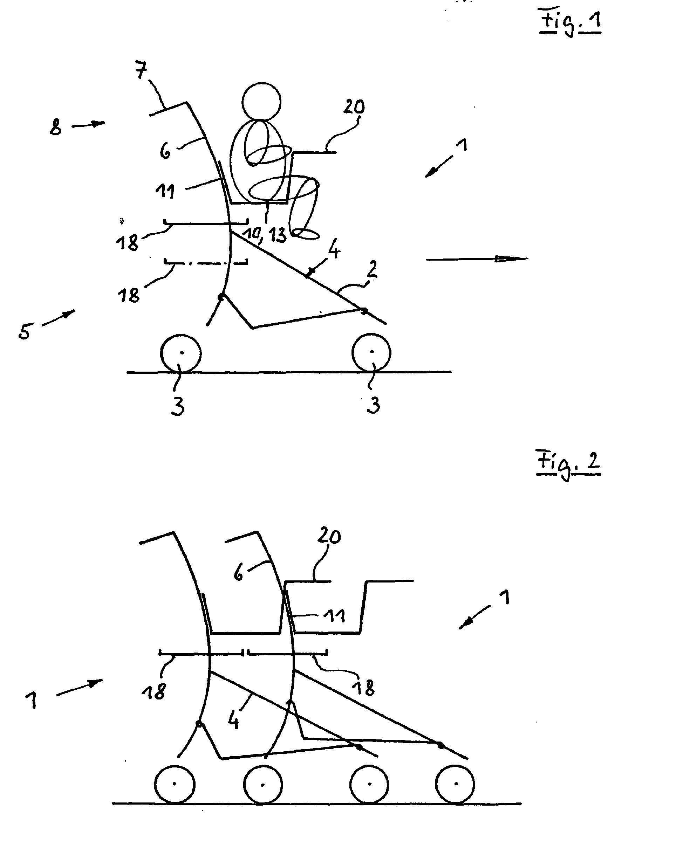

Die in Fig. 1 dargestellte fahrbare Sitzeinrichtung 1 für ein Kleinkind weist ein mit vier Fahrrollen 3 ausgestattetes Fahrgestell 2 auf, das sich in Schieberichtung, siehe Pfeil, konisch verjüngt oder in konisch gleichwirkender Weise gestaltet ist. Die Rückseite 5 der Sitzeinrichtung 1 ist durch zwei nach oben gerichtete Träger 6 gebildet, an deren oberen Enden jeweils ein Griff 7 angeordnet ist, um eine Schiebeeinrichtung 8 zu bilden. Von den Trägern 6 ausgehend erstrecken sich zwei Längsstreben 4 nach vorne. Die Träger 6 tragen einen Sitz 10, der eine Rückenlehne 11 und eine Sitzfläche 13 aufweist. Der Sitz 10 wird nach vorne durch einen Kleintisch 20 begrenzt. Im Sitz 10 befindet sich ein Kleinkind. Unterhalb des Sitzes 10 und größtenteils hinter diesem angeordnet weist die Sitzeinrichtung 1 wenigstens eine Ablage 18 auf, die zum Abstellen eines Tabletts bestimmt ist, auf dem Speisen und Getränke abstellbar sind. Eine weitere gleiche Ablage 18 ist strichpunktiert eingezeichnet. Die wenigstens eine Ablage 18 ist zwisehen den Trägern 6 angeordnet. Zwischen den Längsstreben 4 ist eine lageveränderbare Ablage 9 angeordnet, die von den Längsstreben 4 und den Trägern 6 gehalten wird.

Fig. 2 zeigt zwei platzsparend ineinandergeschobene Sitzeinrichtungen 1. Die Längsstreben 4 der rückwärtig eingeschobenen Sitzeinrichtung 1 befmden sich zwischen den Trägern 6 der vorausbefindlichen Sitzeinrichtung 1. Ebenso befindet sich der Kleintisch 20 der hinteren Sitzeinrichtung 1 über der Rückenlehne 11 der vorderen Sitzeinrichtung 1, während die Ablagen 18 der beiden Sitzeinrichtungen 1 hintereinander angeordnet sind.

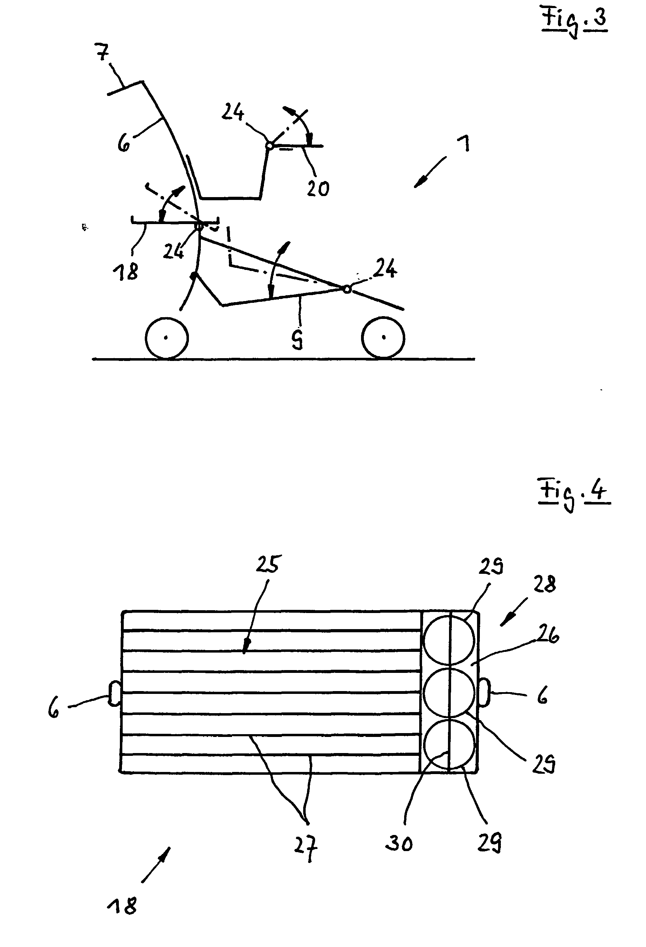

Je nach Gestaltung der Sitzeinrichtung 1 kann es im Interesse einer größtmöglichen Ineinanderschiebbarkeit zweckmäßig sein, bestimmte Teile der Sitzeinrichtung 1 bewegbar zu befestigen, so dass diese Teile beim Ineinanderschiebevorgang mehrerer Sitzeinrichtungen 1 anstatt anzustoßen entsprechend ausweichen können. Aus der Zeichnung gemäß Fig. 3 geht hervor, dass der Kleintisch 20, sowie die wenigstens eine Ablage 18 und die lageveränderbare Ablage 9 jeweils um eine horizontale Achse 24 begrenzt bewegbar an der Sitzeinrichtung 1 angeordnet sein können. Die Doppelpfeile zeigen den Schwenkbereich und die strichpunktiert gezeichnete Darstellung der oben genannten Teile 9, 18, 20 soll deren Verschwenkbarkeit verdeutlichen.

In Fig. 4 ist in Draufsicht eine bevorzugte Form einer Ablage 18 dargestellt. Die rahmenartig gestaltete Ablage 18, die an den Trägern 6 befestigt ist, weist einen Abstellbereich 26 für Flaschen und Gläser auf. Drahtstäbe 27 bilden die Stellfläche für das Tablett und ringförmige Halterungen 29, die von wenigstens einem unterhalb der Halterungen 29 befindlichen Stab 30 gekreuzt werden, sind zum Abstellen der Flaschen und Gläser bestimmt, wobei die Flaschen und Gläser von den Halterungen 29 umfasst werden und auf dem wenigstens einen Stab 30 aufliegen. Die Halterungen 29 und der wenigstens eine Stab 30 bilden Abstelleinrichtungen 28 für die erwähnten Flaschen und Gläser.

Während im Ausführungsbeispiel der Abstellbereich 26 in die rahmenartig gestaltete Ablage 18 eingebunden ist, sind Ausführungen denkbar, bei denen der Abstellbereich 26 durch ein separates Teil in Form einer Abstelleinrichtung 28 gebildet ist, das entweder an der Ablage 18 befestigt oder dieser in geringem Abstand zugeordnet ist. Es ist auch denkbar, mindestens eine beispielsweise als Korb gestaltete Abstelleinrichtung 28 an einem der Träger 6 zu befestigen.

## Patentansprüche

1. Fahrbare Sitzeinrichtung (1) für ein Kleinkind, mit einem Fahrgestell (2), mit einer Schiebeeinrichtung (8) und mit einem Sitz (10) zur Aufnahme eines Kleinkindes, wobei der Sitz (10) eine Sitzfläche (13) und eine Rükkenlehne (11) aufweist und nach vorne durch einen Kleintisch (20) begrenzt ist und wobei hinter dem Sitz (10) wenigstens eine Ablage (18) zum Abstellen von Tabletts vorgesehen ist, **dadurch gekennzeichnet, dass** die Ablage (18) horizontal angeordnet ist und dass das Fahrgestell (2) durch konische Gestaltung so aufgebaut ist, dass die Sitzeinrichtung (1) in eine weitere gleiche Sitzeinrichtung (1) platzsparend einschiebbar ist.

2. Fahrbare Sitzeinrichtung nach Anspruch 1, **dadurch gekennzeichnet, dass** der Kleintisch (20) höher angeordnet ist als die Rückenlehne (11) des Sitzes (10).

3. Fahrbare Sitzeinrichtung nach Anspruch 1 oder 2, **dadurch gekennzeichnet, dass** der Kleintisch (20) und/oder die wenigstens eine Ablage (18) jeweils um eine horizontale Achse (24) begrenzt verschwenkbar angeordnet sind.

4. Fahrbare Sitzeinrichtung nach einem der Ansprüche 1 bis 3, **dadurch gekennzeichnet, dass** die wenigstens eine Ablage (18) einen Abstellbereich (25) für ein Tablett und eine Abstelleinrichtung (28) für Flaschen und Gläser aufweist.

5. Fahrbare Sitzeinrichtung nach einem der Ansprüche 1 bis 3, **dadurch gekennzeichnet, dass** wenigstens eine Abstelleinrichtung (28) an einem Träger (6) der Sitzeinrichtung angeordnet ist.

## Claims

1. A mobile seating arrangement (1) for a small child, comprising a wheel frame (2), a pushing means (8) and a seat (10) for holding a small child, wherein the seat (10) has a seating surface (13) and a backrest (11) and is bounded towards the front by a small table (20) and wherein at least one shelf (18), on which trays may be deposited, is provided behind the seat (10), **characterised in that** the shelf (18) is arranged horizontally and **in that** the wheel frame (2) is conically constructed so that the seating arrangement (1) is nestable with a further, like seating arrangement (1) in a space-saving manner.

2. A mobile seating arrangement according to claim 1, **characterised in that** the small table (20) is arranged higher than the backrest (11) of the seat (10).

3. A mobile seating arrangement according to claim 1 or 2, **characterised in that** the small table (20) and/or the at least one shelf (18) are each arranged so as to have limited pivotability about a horizontal axis (24).

4. A mobile seating arrangement according to any one of claims 1 to 3, **characterised in that** the at least one shelf (18) has a depositing region (25) for a tray and a depositing means (28) for bottles and glasses.

5. A mobile seating arrangement according to any one of claims 1 to 3, **characterised in that** at least one depositing means (28) is arranged on a support (6) of the seating arrangement.

## Revendications

1. Dispositif mobile (1) formant siège pour un petit enfant, avec un châssis (2), avec un dispositif de poussée (8) et avec un siège (10) pour recevoir un petit enfant, le siège (10) présentant une assise (13) et un dossier (11) et étant délimité vers l'avant par une tablette (20), et au moins un casier ou bac de réception (18) étant prévu derrière le siège (10) pour y déposer des plateaux, **caractérisé en ce que** le casier ou bac de réception (18) est disposé horizontalement, et **en ce que** le châssis (2) est conçu, par une configuration conique, de telle sorte que le dispositif (1) formant siège peut être enfilé d'une manière peu encombrante ou compacte dans un autre dispositif (1) formant siège identique.

2. Dispositif mobile formant siège selon la revendication 1, **caractérisé en ce que** la tablette (20) est disposée plus haut que le dossier (11) du siège (10).

3. Dispositif mobile formant siège selon la revendication 1 ou 2, **caractérisé en ce que** la tablette (20) et/ou le casier ou bac de réception (18) au moins unique sont respectivement disposés à pivotement limité autour d'un axe horizontal (24).

4. Dispositif mobile formant siège selon l'une des revendications 1 à 3, **caractérisé en ce que** le casier ou bac de réception (18) au moins unique présente une zone de réception (25) pour un plateau et un dispositif récepteur (28) pour des bouteilles et des verres.

5. Dispositif mobile formant siège selon l'une des revendications 1 à 3, **caractérisé en ce qu'**au moins un dispositif récepteur (28) est disposé sur un élément porteur (6) du dispositif formant siège.
